# DEMANDE DE BREVET EUROPEEN

(11) **EP 4 706 874 A1**
(43) Date de publication de la demande: **11.03.2026**
(21) Numéro de dépôt: 25199241.8
(22) Date de dépôt: 01.09.2025
(51) Int. Cl.: B23K 37/04, B23Q 3/02, B25H 1/08, F16B 35/06

(54) **DISPOSITIF DE FIXATION ET TABLE DE TRAVAIL APTE À RECEVOIR LEDIT DISPOSITIF**

(30) Priorité: 30.08.2024 FR 2409301
(71) Demandeur: Digital Consulting, 57000 Metz (FR)
(72) Inventeur: LEGRAND, THOMAS, 57000 METZ (FR)
(74) Mandataire: Brungard, Yves Francois

(57) **Abrégé**

Un dispositif de fixation pour fixer de manière amovible un accessoire sur une table (1) de travail comporte :
- une tige (310) comportant des moyens de serrage (4) aptes à prendre appui sur la table ou l'accessoire ;
- un élément d'accrochage (32) lié à une deuxième extrémité (312) de la tige (310) opposée à la première extrémité (311), l'élément d'accrochage (32) comportant au moins un crochet (320) faisant saillie radialement par rapport à l'axe de la tige (310), la tige (310) et l'élément d'accrochage (32) étant aptes à traverser une ouverture (2) de la table (1), l'élément d'accrochage (32) étant apte à venir en prise au bord de l'ouverture (2) après un pivotement. Le crochet (320) comporte une première aile (3201) s'étendant selon un plan perpendiculaire à l'axe de la tige (310) et une deuxième aile (3202) faisant saillie du plan de la première aile (3201), la première aile (3201) étant apte à venir en prise au bord de l'ouverture (2) et la deuxième aile (3202) formant butée contre l'ouverture (2) pour limiter le pivotement de l'élément d'accrochage (32).

## Description

### Domaine technique

L'invention concerne un dispositif de fixation d'accessoires, tels que des butées ou des brides, et une table de travail apte à recevoir ledit dispositif, notamment une table de soudure.

### Technique antérieure

La technique de soudure nécessite souvent de placer des pièces assemblées entre elles dans une position relative fixe, avant de réaliser la soudure qui figera cette position.

On connaît un système de fixation comportant une table de soudure et des dispositifs de fixation qui peuvent être fixés de manière amovible sur la table de soudure. Pour cela, la table de soudure comporte une pluralité d'ouvertures cylindriques et les dispositifs de fixation comportent un pion destiné à traverser l'une des ouvertures. Un système de serrage est prévu dans le dispositif, lequel provoque la sortie de billes qui viennent en prise au bord de l'ouverture le long de la face opposée à la face sur laquelle le dispositif est installé.

On connaît également par le document FR 3 114 528 A1 un autre système de fixation comportant une table de soudure et des dispositifs de fixation qui peuvent être fixés de manière amovible sur la table de soudure. Le dispositif de fixation comporte une tige avec des éléments d'accrochage sous la forme d'une barre transversale traversant la tige. Chaque ouverture sur la table de travail comporte deux extensions de manière à laisser passer la barre transversale lors de l'insertion de la tige dans l'ouverture. Puis par une rotation d'un quart de tour, la barre transversale vient en prise avec la face arrière de la table. Un écrou vissé sur la tige permet d'obtenir le serrage du dispositif de fixation sur la table de travail.

Bien que ce système de fixation soit bien moins onéreux que le système à billes, son utilisation n'est pas toujours des plus pratiques. En effet, pour obtenir la retenue du dispositif de fixation, il est nécessaire pour l'opérateur d'orienter la tige de telle sorte que la barre transversale soit prise le long de l'ouverture, et de maintenir cette orientation pendant le serrage.

### Exposé de l'invention

L'invention vise à fournir un système de fixation, une table de travail et un dispositif de fixation qui soient peu onéreux à fabriquer et qui soient d'une manipulation aisée.

Avec ces objectifs en vue, l'invention a pour objet un dispositif de fixation pour fixer de manière amovible un accessoire sur une table de travail, le dispositif comportant :
- une tige comportant une première extrémité de la tige ;
- un élément d'accrochage lié à une deuxième extrémité de la tige opposée à la première extrémité, l'élément d'accrochage comportant au moins un crochet faisant saillie dans une direction radiale par rapport à l'axe de la tige, la tige et l'élément d'accrochage étant aptes à traverser une ouverture de la table, l'élément d'accrochage étant apte à venir en prise au bord de l'ouverture après un pivotement,
- des moyens de serrage aptes à prendre appui sur la table ou l'accessoire et à serrer l'élément d'accrochage par l'intermédiaire de la tige, les moyens de serrage comportant un organe de manœuvre à la première extrémité de la tige,
le dispositif étant caractérisé en ce que :
le crochet comporte une première aile s'étendant selon un plan perpendiculaire à l'axe de la tige et une deuxième aile faisant saillie du plan de la première aile, la première aile étant apte à venir en prise au bord de l'ouverture et la deuxième aile formant butée contre l'ouverture pour limiter le pivotement de l'élément d'accrochage.

Un tel dispositif de fixation peut-être mise en place sur une table de travail en intervenant d'un seul côté de la table. La mise en prise est effectuée par l'insertion de l'élément d'accrochage dans l'ouverture puis par un pivotement qui amène la première aile à l'arrière de la table, tandis que la deuxième aile forme une butée qui arrête le pivotement et définit ainsi une position de prise sans que l'opérateur ait un réglage à faire. La position de prise est ainsi prédéterminée et sûre. De même lors du retrait du dispositif de fixation, la deuxième aile vient en butée et arrête le pivotement de l'élément de blocage dans la position dans laquelle le dispositif peut être retiré hors de l'ouverture. Les accessoires qui peuvent être fixés par le dispositif sont par exemple des brides, des butées, des pions cylindriques, des serre-joints ou des sauterelles.

Selon une disposition constructive, le dispositif de fixation comporte un corps traversé par un perçage, la tige étant logée en libre rotation dans le perçage, en butée contre une face d'appui bordant le perçage. Le corps permet de manipuler le dispositif et de transmettre un effort de serrage soit directement sur la table, soit à un accessoire interposé.

Selon une disposition constructive, les moyens de serrage comportent un trou taraudé de l'élément d'accrochage et un filetage de la deuxième extrémité de la tige, la tige étant vissée dans le trou taraudé, les moyens de serrage comportant en outre une tête à la première extrémité de la tige en appui sur la face d'appui au bord du perçage. La tige et la tête forment ainsi une vis. La rotation de la tige permet ainsi d'entraîner l'élément d'accrochage vers la position de prise et, lorsque l'élément de blocage est arrêté par la deuxième aile, la rotation de la tige se traduit par un serrage de l'élément d'accrochage par vissage de la tige dans le trou taraudé. Les phases successives de mise en place de l'élément l'accrochage puis de serrage de celui-ci sont réalisés dans le même mouvement.

Selon un perfectionnement, la deuxième aile s'étend selon un plan radial et comporte à son extrémité la plus éloignée de l'axe de la tige une nervure. La nervure permet de renforcer la cohésion mécanique entre la première et la deuxième aile.

Selon une disposition constructive, l'élément d'accrochage comporte deux crochets disposés symétriquement par rapport à l'axe de la tige. Ainsi, les efforts de serrage sur l'élément d'accrochage ont une résultante qui est dans l'axe de la tige, ce qui évite tout porte-à-faux. Il est envisageable d'utiliser des éléments d'accrochage avec plus de deux crochets, mais ceci aurait l'inconvénient de créer des ouvertures avec un plus grand nombre d'entailles, ce qui diminuerait la résistance de la table au niveau des ouvertures.

Selon une disposition constructive, la première aile a la forme d'un secteur centré sur l'axe de la tige.

Selon une disposition constructive, les moyens de serrage sont des moyens de vissage, la deuxième aile étant située à gauche du secteur de la première aile lorsque les moyens de vissage sont à droite, et inversement. Ainsi, lors de la manœuvre des moyens de vissage pour obtenir le serrage par une rotation, la deuxième aile laisse la première aile s'engager sous le bord de l'ouverture avant de stopper la rotation de l'élément d'accrochage. En continuant la rotation des moyens de vissage, le corps est serré contre la table en prenant appui sur l'élément d'accrochage.

Selon un mode de réalisation, le corps a une forme extérieure cylindrique de même axe que le perçage. Ainsi le corps peut servir de butée contre lequel des éléments à assembler peuvent être mis en appui.

Selon un perfectionnement, le corps comporte un épaulement sur lequel se loge de manière amovible une bague destinée à venir en appui sur la table de travail. Le dispositif de fixation peut être ainsi utilisé pour différentes applications. Avec la bague, l'application est celle d'une butée. Sans la bague, tout autre accessoire, comme une bride, peut être fixé à la place.

Selon un mode de réalisation, le dispositif comporte des moyens de guidage pour guider le corps et l'élément dc'accrochage en translation selon l'axe de la tige. Ainsi le pivotement de l'élément de blocage peut être obtenu en faisant pivoter le corps. En l'absence des moyens de guidage, le pivotement de l'élément d'accrochage est obtenu par celui de la tige.

Selon une disposition constructive, la tête de la tige est noyée dans le corps. Ainsi la tête est mieux protégée lorsque le dispositif est en place sur la table et que les opérations de soudure ont lieu.

L'invention aussi pour objet une table de travail comportant au moins une ouverture pour la fixation d'au moins un accessoire par un dispositif tel que défini précédemment l'ouverture comportant une partie cylindrique et, caractérisée en ce que l'ouverture comporte une entaille en forme de secteur de même centre que la partie cylindrique pour le passage de chaque crochet), la section de l'ouverture étant constante sur toute l'épaisseur de la table.

Selon un perfectionnement, l'entaille comporte en outre une première encoche pour le passage d'une nervure telle que définie précédemment. Ainsi le pivotement de l'élément d'accrochage amène la deuxième aile au plus près des bords de l'ouverture.

Selon un mode de réalisation, l'entaille comporte en outre une deuxième encoche symétrique à la première encoche par rapport à un plan médian de l'entaille incluant une médiatrice du secteur et perpendiculaire au plan de la table. Ainsi, la table est réversible, permettant de fixer le dispositif de fixation indifféremment sur une face ou l'autre de la table avec la même ouverture.

Selon un mode de réalisation, la table comporte une pluralité d'ouvertures alignées en au moins une ligne. L'opérateur peut choisir quelle ouverture convient le mieux à son travail.

L'invention a aussi pour objet un système de fixation comportant une table de travail et un dispositif de fixation tels que définis précédemment.

L'invention a aussi pour objet un élément d'accrochage tel qu'inclus dans un dispositif de fixation défini précédemment, l'élément d'accrochage comportant un trou taraudé apte à recevoir une deuxième extrémité d'une tige vissée dans le trou taraudé, au moins un crochet faisant saillie dans une direction radiale par rapport à l'axe du trou taraudé, l'élément d'accrochage avec la tige étant apte à traverser une ouverture d'une table, l'élément d'accrochage étant apte à venir en prise au bord de l'ouverture après un pivotement, le crochet comportant une première aile s'étendant selon un plan perpendiculaire à l'axe du trou taraudé et une deuxième aile faisant saillie du plan de la première aile, la première aile étant apte à venir en prise au bord de l'ouverture et la deuxième aile formant butée contre l'ouverture pour limiter le pivotement de l'élément d'accrochage.

### Brève description des figures

L'invention sera mieux comprise et d'autres particularités et avantages apparaîtront à la lecture de la description qui va suivre, la description faisant référence aux dessins annexés parmi lesquels :
- la figure 1 est une vue en perspective d'une table conforme à un premier mode de réalisation de l'invention ;
- la figure 2 est une vue en perspective d'une ouverture de la table de la figure 1 ;
- la figure 3 est une vue plus en perspective d'un système de fixation sur la table de la figure 1, dans une position avant assemblage ;
- la figure 4 est une vue similaire à la figure 3 dans une position intermédiaire en cours d'assemblage ;
- la figure 5 est une vue similaire à la figure 3 dans une position de fixation ;
- la figure 6 est une vue en perspective un élément d'accrochage du système de la figure 3 ;
- la figure 7 est une vue en coupe du système de fixation dans la position de la figure 4 ;
- la figure 8 est une vue de dessous du système de fixation dans la position de la figure 4 ;
- la figure 9 est une vue similaire à la figure 8 dans la position de la figure 5 ;
- la figure 10 est une vue similaire à la figure 7 d'un système de fixation selon un deuxième mode de réalisation ;
- la figure 11 et une vue en perspective d'une bride qui peut être fixée avec le système de fixation selon l'invention ;
- la figure 12 est une vue similaire à la figure 2 d'une ouverture selon un deuxième mode de réalisation ;
- la figure 13 est une vue similaire à la figure 9 avec une ouverture de la figure 12.

### Description détaillée

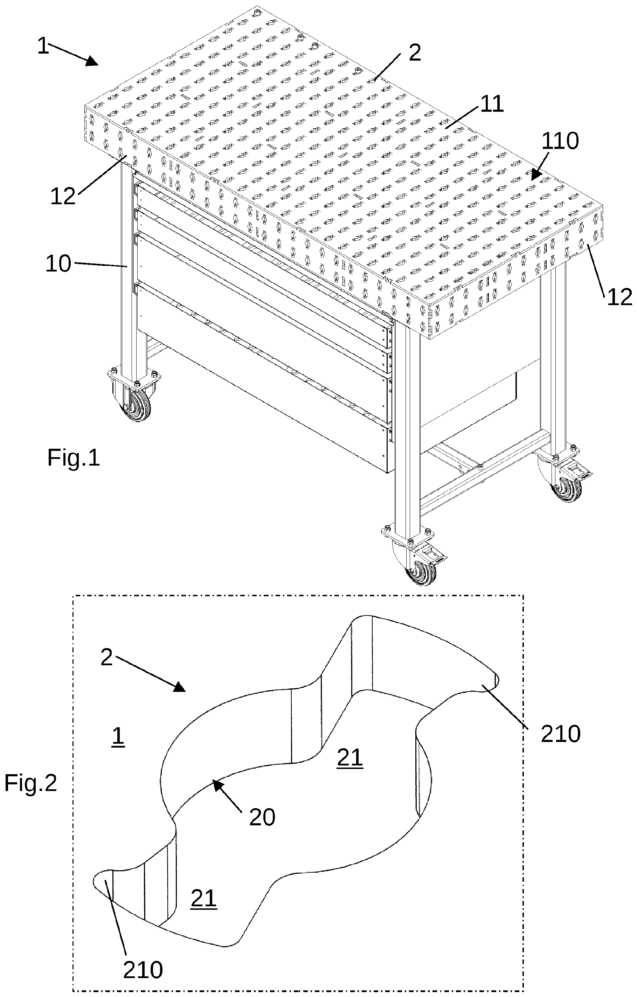

Une table 1 de travail destinée à la soudure est montrée sur la figure 1. La table 1 comporte un piétement 10 sur lequel s'étend une plaque 11 en acier bordée de quatre bords tombants 12. La table 1 présente une face supérieure 110, visible sur la figure 1 et une face inférieure 111. Chaque plaque 11 ou bord tombant 12 comporte une pluralité d'ouvertures 2 alignées en au moins deux lignes. Les ouvertures 2 sont toutes identiques et telles que montrées sur la figure 2. Chaque ouverture 2 comporte une partie cylindrique 20 et deux entailles 21 en forme de secteur de même centre que la partie cylindrique 20 pour le passage de crochets 320. L'entaille 21 comporte en outre une première encoche 210 dans la partie la plus éloignée de la partie cylindrique 20 le long de l'un des bords du secteur 21. Les ouvertures 2 sont par exemple réalisées par découpe au laser d'une tôle d'acier.

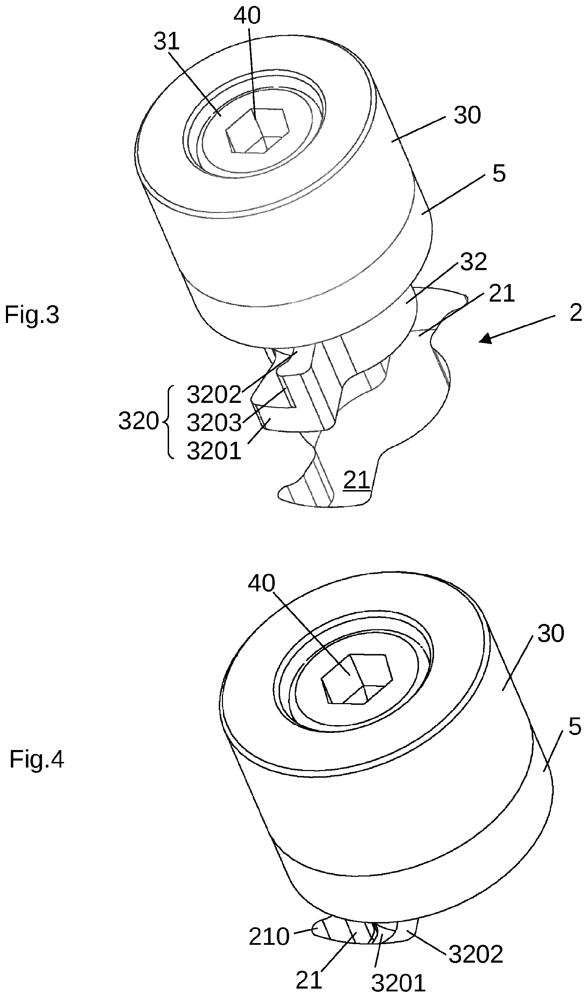

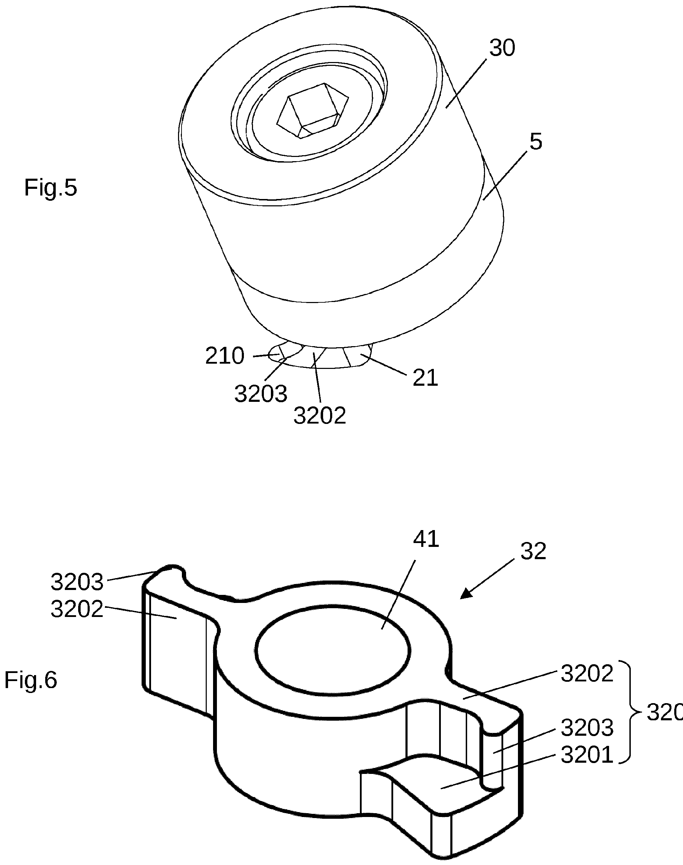

Un premier mode de réalisation d'un dispositif de fixation 3 conforme à l'invention pour fixer de manière amovible un accessoire sur la table 1 de travail est montré sur les figures 3 à 9. Le dispositif comporte :
- un corps 30 traversé par un perçage 301 ;
- une vis 31 comportant une tige 310 logée en libre rotation dans le perçage 301, la vis 31 comportant à une première extrémité 311 des moyens de serrage 4 sous la forme d'une tête en appui contre une face d'appui 3030 bordant le perçage 301, les moyens de serrage 4 comportant un organe de manœuvre 40 ;
- un élément d'accrochage 32, tel que montré sur la figure 6, les moyens de serrage 4 comportant des moyens de vissage comportant un trou taraudé 41 de l'élément d'accrochage 32 et une deuxième extrémité 312 filetée de la tige 310 opposée à la première extrémité 311.

L'élément d'accrochage 32 comporte deux crochets 320 faisant saillie radialement par rapport à l'axe de la tige 310 et disposés symétriquement par rapport à l'axe de la tige 310. La tige 310 et l'élément d'accrochage 32 sont aptes à traverser l'une des ouvertures 2 de la table 1, l'élément d'accrochage 32 étant apte à venir en prise au bord de l'ouverture 2 après un pivotement. Les deux crochets 320 sont symétriques par rapport à l'axe du trou taraudé 41.

Chaque crochet 320 comporte une première aile 3201 s'étendant selon un plan perpendiculaire à l'axe de la tige 310 et une deuxième aile 3202 faisant saillie du plan de la première aile 3201. La première aile 3201 est apte à venir en prise au bord de l'ouverture 2. La deuxième aile 3202 forme butée contre l'ouverture 2 pour limiter le pivotement de l'élément d'accrochage 32. La deuxième aile 3202 s'étend selon un plan radial et comporte à son extrémité la plus éloignée de l'axe de la tige 310 une nervure 3203. La première aile 3201 a la forme d'un secteur centré sur l'axe de la tige 310. Les moyens de vissage sont à droite et la deuxième aile 3202 est située à gauche du secteur de la première aile 3201.

Le corps 30 a une forme extérieure cylindrique de même axe que le perçage 301. Il comporte en outre un épaulement 302 sur lequel se loge de manière amovible une bague 5 destinée à venir en appui sur la table 1 de travail. Le corps 30 comporte un lamage 303 à l'entrée du perçage 301 de telle sorte que la tête de la tige est noyée dans le corps 30. La face d'appui 3030 est au fond du lamage 303.

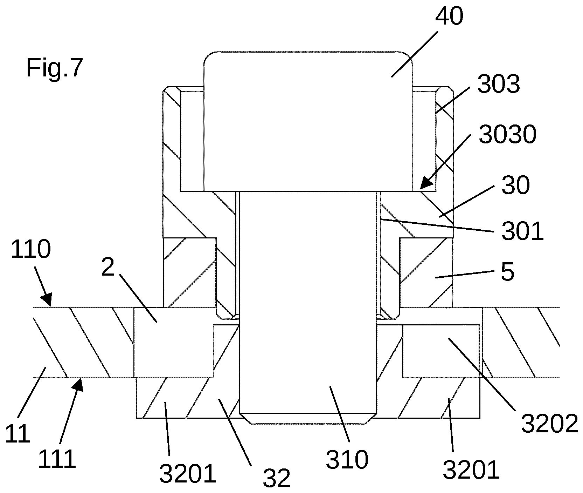

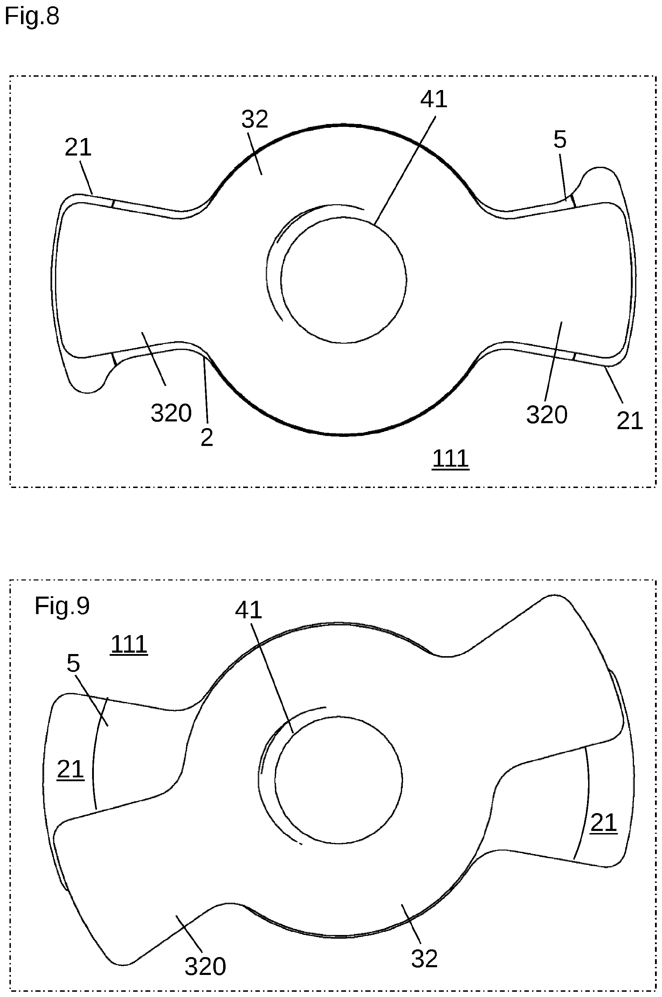

Lors de l'utilisation, le dispositif est initialement séparé de la table 1. Comme le montre la figure 3, on approche le dispositif de l'une des ouvertures 2 de la table 1 en alignant les crochets 320 de l'élément d'accrochage 32 avec les entailles 21 de l'ouverture 2. Puis, comme montré sur les figures 4 et 8, on amène la bague 5 en contact avec la face supérieure 110 de la table 1. L'élément d'accrochage 32 traverse l'ouverture 2 de telle sorte que les premières ailes 3201 dépassent au-delà de la face inférieure 111 de la table 1, comme montré sur la figure 7. On utilise l'organe de manœuvre 40, ici une empreinte hexagonale, pour faire tourner la vis 31 dans le sens du serrage. La rotation de la vis 31 entraîne celle de l'élément d'accrochage 32 de telle sorte que les premières ailes 3201 viennent en prise avec les bords de l'ouverture 2, par-dessus la face inférieure jusqu'à ce que les deuxièmes ailes 3202 fassent butée dans l'ouverture 2, comme le montre les figures 5 et 9. En continuant la rotation de la vis 31, on serre l'élément d'accrochage 32 en mettant les premières ailes 3201 en appui contre la face inférieure 111 et le corps 30 en appui sur la face supérieure 110. Le démontage est obtenu en tournant la vis 31 en sens inverse pour obtenir le desserrage des moyens de vissage.

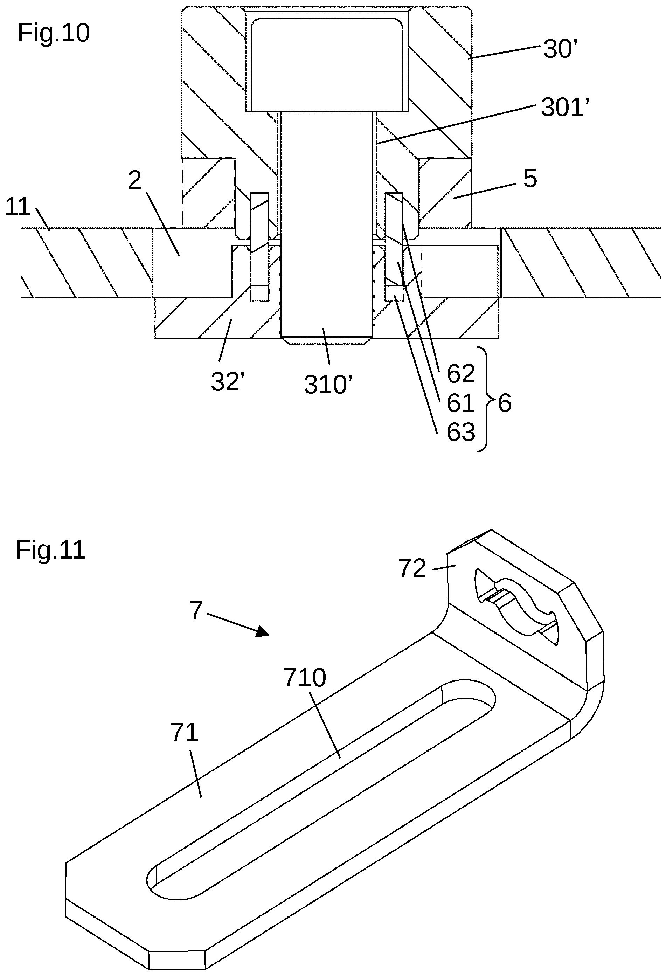

La figure 11 montre une bride utilisable avec un dispositif de fixation 3 selon l'invention. La bride comporte une première branche sensiblement plane et une deuxième branche s'étendant perpendiculairement à la première branche. La première branche comporte une lumière de forme oblongue. Pour sa fixation, on retire la bague 5 du dispositif de fixation 3 et on introduit la bride à la place de la bague 5 avec le corps 30' dans la lumière, l'axe du perçage 301 étant perpendiculaire à la première branche. On réalise alors le serrage en appuyant la première branche sur la table 1 de travail.

Selon un deuxième mode de réalisation, tel que montré en coupe sur la figure 10, le dispositif de fixation 3' se distingue du premier mode de réalisation en ce qu'il comporte des moyens de guidage 6 pour guider le corps 30' et l'élément de blocage en translation selon l'axe de la tige 310'. Les moyens de guidage 6 sont formés par deux pions 61 qui sont logés d'une part dans deux trous borgnes 62 du corps 30' selon un axe parallèle à l'axe du perçage 301', et d'autre part dans deux trous 63 dans la partie cylindrique de l'élément d'accrochage 32'.

Lors de l'utilisation du dispositif de fixation 3' selon le deuxième mode de réalisation, on commande directement la mise en prise de l'élément d'accrochage 32' en pivotant le corps 30' autour de l'axe de perçage 301' l'élément d'accrochage 32' pivotant directement avec le corps 30'. On réalise ensuite le serrage avec la vis 31.

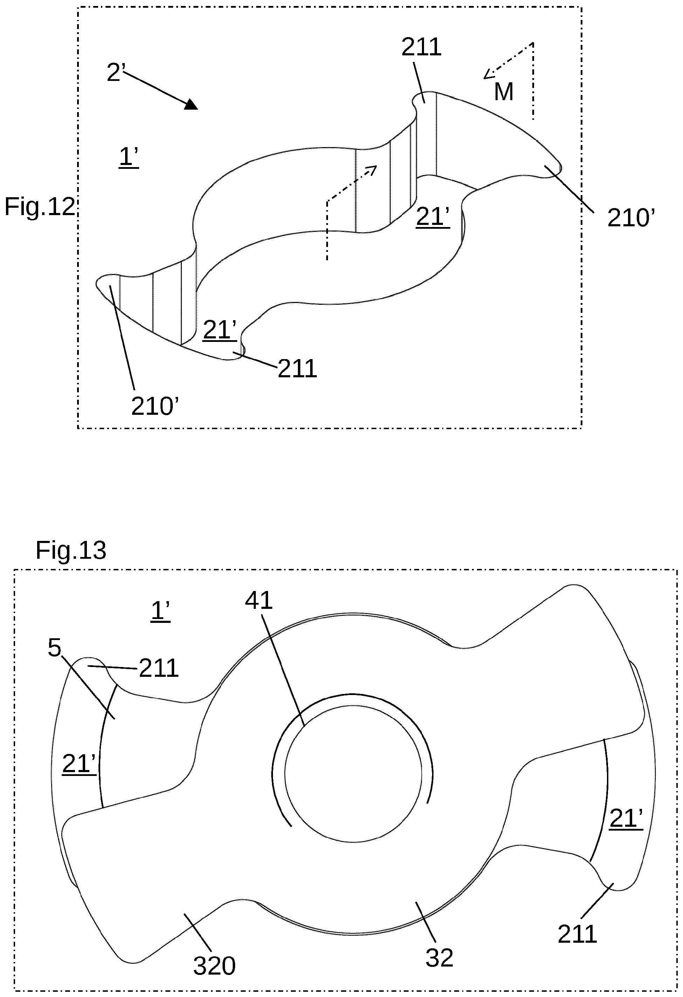

Dans un deuxième mode de réalisation de la table 1', montré sur les figures 12 et 13, l'ouverture 2' se distingue de celle du premier mode de réalisation en ce que chaque entaille 21' comporte en outre une deuxième encoche 211 symétrique à la première encoche 210' par rapport à un plan médian M de l'entaille 21' incluant une médiatrice du secteur et perpendiculaire au plan de la table 1'.

L'invention n'est pas limitée aux modes de réalisation qui ont été décrits uniquement à titre d'exemple. Les moyens de vissage pourraient être réalisés avec une tige solidaire de l'élément d'accrochage 32 et un écrou vissé à la première extrémité 311 de la tige. D'autres accessoires peuvent être fixés en prenant la place de la bague ou en intégrant directement le corps.

## Revendications

1. Dispositif de fixation pour fixer de manière amovible un accessoire sur une table (1) de travail, le dispositif comportant :
- une tige (310) comportant une première extrémité (311) ;
- un élément d'accrochage (32) lié à une deuxième extrémité (312) de la tige (310) opposée à la première extrémité (311), l'élément d'accrochage (32) comportant au moins un crochet (320) faisant saillie dans une direction radiale par rapport à l'axe de la tige (310), la tige (310) et l'élément d'accrochage (32) étant aptes à traverser une ouverture (2) de la table (1), l'élément d'accrochage (32) étant apte à venir en prise au bord de l'ouverture (2) après un pivotement,
- des moyens de serrage (4) aptes à prendre appui sur la table ou l'accessoire et à serrer l'élément d'accrochage (32) par l'intermédiaire de la tige (310), les moyens de serrage (4) comportant un organe de manœuvre (40) à la première extrémité (311) de la tige (310) ;
le dispositif étant **caractérisé en ce que** :
le crochet (320) comporte une première aile (3201) s'étendant selon un plan perpendiculaire à l'axe de la tige (310) et une deuxième aile (3202) faisant saillie du plan de la première aile (3201), la première aile (3201) étant apte à venir en prise au bord de l'ouverture (2) et la deuxième aile (3202) formant butée contre l'ouverture (2) pour limiter le pivotement de l'élément d'accrochage (32).

2. Dispositif selon la revendication 1, **caractérisé en ce qu'**il comporte un corps (30) traversé par un perçage (301), la tige (310) étant logée en libre rotation dans le perçage (301), en butée contre une face d'appui (3030) bordant le perçage (301).

3. Dispositif selon la revendication 2, dans lequel les moyens de serrage (4) comportent un trou taraudé (41) de l'élément d'accrochage (32) et un filetage de la deuxième extrémité (312) de la tige (310), la tige (310) étant vissée dans le trou taraudé (41), les moyens de serrage (4) comportant en outre une tête à la première extrémité (311) de la tige (310) en appui sur la face d'appui (3030) au bord du perçage (301).

4. Dispositif selon l'une des revendications 1 ou 2, dans lequel la deuxième aile (3202) s'étend selon un plan radial et comporte à son extrémité la plus éloignée de l'axe de la tige (310) une nervure (3203).

5. Dispositif selon l'une des revendications précédentes, dans lequel l'élément d'accrochage (32) comporte deux crochets (320) disposés symétriquement par rapport à l'axe de la tige (310).

6. Dispositif selon l'une des revendications précédentes, dans lequel la première aile (3201) a la forme d'un secteur centré sur l'axe de la tige (310).

7. Dispositif selon la revendication 6, dans lequel les moyens de serrage (4) sont des moyens de vissage, la deuxième aile (3202) étant située à gauche du secteur de la première aile (3201) lorsque les moyens de vissage sont à droite, et inversement.

8. Dispositif selon l'une des revendications précédentes, dans lequel le corps (30) a une forme extérieure cylindrique de même axe que le perçage (301).

9. Dispositif selon la revendication 8, dans lequel le corps (30) comporte un épaulement (302) sur lequel se loge de manière amovible une bague (5) destinée à venir en appui sur la table (1) de travail.

10. Dispositif selon l'une des revendications précédentes en combinaison avec la revendication 2, **caractérisé en ce qu'**il comporte des moyens de guidage (6) pour guider le corps (30') et l'élément d'accrochage (32) en translation selon l'axe de la tige (310').

11. Dispositif selon la revendication 2, dans lequel la tête de la tige (310) est noyée dans le corps (30).

12. Table de travail comportant au moins une ouverture (2) pour la fixation d'au moins un accessoire par un dispositif selon l'une des revendications précédentes, l'ouverture (2) comportant une partie cylindrique (20), **caractérisée en ce que** l'ouverture (2) comporte une entaille (21) en forme de secteur de même centre que la partie cylindrique (20) pour le passage de chaque crochet (320), la section de l'ouverture (2) étant constante sur toute l'épaisseur de la table.

13. Table de travail selon la revendication 12, dans laquelle l'entaille (21) comporte en outre une première encoche (210) pour le passage d'une nervure (3203) telle que définie dans la revendication 4.

14. Table de travail selon la revendication 13, dans laquelle l'entaille (21') comporte en outre une deuxième encoche (211) symétrique à la première encoche (210') par rapport à un plan médian (M) de l'entaille (21') incluant une médiatrice du secteur et perpendiculaire au plan de la table (1').

15. Table de travail selon la revendication 12 ou 13, **caractérisée en ce qu'**elle comporte une pluralité d'ouvertures (2) alignées en au moins une ligne.

16. Système de fixation comportant une table (1) de travail selon l'une des revendications 12 à 15 et un dispositif de fixation (3, 3') selon l'une des revendications 1 à 11.

17. Élément d'accrochage, **caractérisé en ce qu'**il est issu d'un dispositif de fixation selon l'une des revendications 1 à 11 en combinaison avec la revendication 3, l'élément d'accrochage (32) comportant un trou taraudé (41) apte à recevoir une deuxième extrémité (312) d'une tige (310) vissée dans le trou taraudé (41), au moins un crochet (320) faisant saillie dans une direction radiale par rapport à l'axe du trou taraudé (41), l'élément d'accrochage (32) avec la tige (310) étant apte à traverser une ouverture (2) d'une table (1), l'élément d'accrochage (32) étant apte à venir en prise au bord de l'ouverture (2) après un pivotement, le crochet (320) comportant une première aile (3201) s'étendant selon un plan perpendiculaire à l'axe du trou taraudé (41) et une deuxième aile (3202) faisant saillie du plan de la première aile (3201), la première aile (3201) étant apte à venir en prise au bord de l'ouverture (2) et la deuxième aile (3202) formant butée contre l'ouverture (2) pour limiter le pivotement de l'élément d'accrochage (32).
